# EUROPEAN PATENT APPLICATION

(11) **EP 4 583 254 A1**
(43) Date of publication of application: **09.07.2025**
(21) Application number: 24823509.5
(22) Date of filing: 07.02.2024
(51) Int. Cl.: H01M 10/6552, H01M 10/617, H01M 10/613, H01M 10/6551

(54) **BATTERY PACK AND VEHICLE INCLUDING SAME**

(30) Priority: 16.06.2023 KR 20230077599; 06.02.2024 KR 20240018004
(71) Applicant: LG Energy Solution, Ltd., Seoul 07335 (KR)
(72) Inventor: BAEK, Seung-Ryul, Daejeon 34122 (KR)
(74) Representative: Plasseraud IP
(86) International application number: PCT/KR2024/001851
(87) International publication number: WO 2024/257987

(57) **Abstract**

The present disclosure relates to a battery pack including: a plurality of battery modules including a plurality of battery cells; a cooling pipe assembly configured to supply a cooling medium to the respective battery modules; and a plurality of insertion ports configured to connect the respective battery modules and the cooling pipe assembly to each other, wherein the cooling pipe assembly has connection holes formed on the respective insertion ports so as to communicate with the insertion ports, and having the cross-sectional areas configured to be different from each other such that flow rates of the cooling medium supplied to the respective battery modules through the connection holes are equalized.

## Description

### TECHNICAL FIELD

The present disclosure relates to a battery pack and a vehicle including the same. More specifically, it relates to a battery pack capable of equalizing the flow rates of a cooling medium flowing into battery modules, and a vehicle including the same.

The present application claims priority to Korean Patent Application No. 10-2023-0077599 filed on June 16, 2023 in the Republic of Korea, the disclosures of which are incorporated herein by reference.

The present application claims priority to Korean Patent Application No. 10-2024-0018004 filed on February 06, 2024 in the Republic of Korea, the disclosures of which are incorporated herein by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Current secondary batteries widely used include lithium-ion batteries, lithium-polymer batteries, nickel-cadmium batteries, nickel-hydrogen batteries, nickel-zinc batteries, and the like. When a higher output voltage is required, a battery module or battery pack may be configured by connecting a plurality of battery cells in series. In addition, a battery module or battery pack may be configured by connecting a plurality of battery cells in parallel in order to increase the charge/discharge capacity. Accordingly, the number of battery cells included in the battery module or battery pack may be set in various ways depending on the required output voltage or charge/discharge capacity.

Meanwhile, since battery cells involve chemical reactions when charging and discharging, heat may be generated, and if the temperature quickly reaches an allowable temperature, battery output is limited so that the battery pack is unable be used efficiently.

Accordingly, the battery module including a plurality of battery cells includes a heat sink to cool the battery cells that generate heat. In addition, the battery pack including a plurality of battery modules supplies a cooling medium to the heat sink of each battery module when the battery cell generates heat, thereby lowering the temperature.

However, if the flow rates of the cooling medium flowing into the heat sinks of the respective battery modules are not uniform, the cooling performance differs between the respective heat sinks, resulting in temperature differences between the battery modules. For example, if a small amount of cooling medium is introduced into a battery module, the temperature of battery cells included in the battery module more quickly reaches the allowable temperature, so that the battery cells deteriorate more quickly than those included in other battery modules. If there are temperature differences between the battery cells due to ununiform flow rates of the cooling medium into the respective battery modules, the lifespan differs between the battery cells so that all battery cells cannot be used to the full performance.

Therefore, there is a need to develop a battery pack having a structure capable of equalizing the flow rates of the cooling medium flowing into the heat sinks of the respective battery modules, thereby evenly cooling the battery cells and minimizing temperature differences between the battery cells.

### DISCLOSURE

### Technical Problem

The present disclosure has been designed to solve the problems of the related art, and therefore the present disclosure is directed to providing a battery pack capable of equalizing the flow rates of the cooling medium flowing into the respective battery modules, thereby minimizing temperature differences between the battery cells or the battery modules, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery pack that includes: a plurality of battery modules including a plurality of battery cells; a cooling pipe assembly configured to supply a cooling medium to the respective battery modules; and a plurality of insertion ports configured to connect the respective battery modules and the cooling pipe assembly to each other, wherein the cooling pipe assembly may have connection holes formed on the respective insertion ports so as to communicate with the insertion ports, and having the cross-sectional areas configured to be different from each other such that flow rates of the cooling medium supplied to the respective battery modules through the connection holes are equalized.

The cooling pipe assembly may include: a plurality of cooling pipes configured such that the cooling medium flows therethrough; and a plurality of connectors to which adjacent cooling pipes among the plurality of cooling pipes and the insertion port are coupled, and the connection holes may be configured to communicate with the respective connectors.

The battery pack according to the present disclosure may further include a pack case configured to accommodate the plurality of battery modules and the cooling pipe assembly, and the plurality of connectors and the plurality of insertion ports may be arranged in one direction of the pack case, and the cross-sectional areas of the connection holes may increase in one direction of the pack case.

The cooling pipe assembly may be provided in pairs to face each other, based on the plurality of battery modules, and may further include an inlet port provided on one side of the pack case such that the cooling medium flows therethrough and an outlet port provided to face the inlet port on one side of the pack case and configured to discharge the cooling medium, and the cross-sectional area of the connection hole may increase as it is farther from the inlet port or the outlet port.

Each of the plurality of battery modules may further include a heat sink configured to cool the plurality of battery cells, and the insertion port may be configured to connect the heat sink and the plurality of connectors, respectively.

Each of the plurality of connectors may include a port insertion portion having the insertion port inserted thereinto and having the connection hole, and a pipe insertion portion configured to communicate with the port insertion portion and having at least one of the plurality of cooling pipes coupled thereto.

The insertion port may include a hooking portion having at least a portion that protrudes outward and is hooked on the end of the port insertion portion.

The insertion port may be coupled upward to the port insertion portion from below so that the end of the port insertion portion is supported on the hooking portion.

The battery pack according to the present disclosure may further include an insertion pipe inserted into the insertion port to vary the cross-sectional area of the connection hole between the respective insertion ports.

The inner diameter of the insertion pipe may increase in one direction of the pack case.

The insertion pipe may include a body portion inserted into the insertion port, and a seating portion extending from the body portion so as to be seated on the end of the insertion port.

The insertion pipe may include a guide protrusion in which at least a portion there protrudes outward, and the insertion port may include a guide groove that is configured such that at least a portion thereof is recessed to correspond to the guide protrusion and such that the guide protrusion is slidably coupled thereto.

The port insertion portion may include a first connector hole into which the insertion port is inserted such that the end of the insertion port is located therein, and a second connector hole defined as the remaining portion, excluding the first connector hole, extending from the first connector hole in the insertion direction of the insertion port, and configured to vary the cross-sectional area of the connection hole between the respective insertion ports.

The cross-sectional area of the second connector hole may increase in one direction of the pack case.

The port insertion portion may further include a protrusion protruding inward from at least a portion of the second connector hole.

The length of the protrusion becomes smaller in one direction of the pack case.

One or more protrusions may be provided, and the number of protrusions may be reduced in one direction of the pack case.

The distance between the protrusions may increase in one direction of the pack case.

In addition, the present disclosure provides a vehicle including the battery pack according to the present disclosure.

### Advantageous Effects

According to one aspect of the present disclosure, it is possible to evenly supply a cooling medium to respective battery modules when battery cells generate heat, thereby lowering the temperature of the battery cells and increasing the lifespan of the battery cells.

In addition, according to one aspect of the present disclosure, it is possible to minimize temperature differences between the battery cells or battery modules by equalizing the flow rates of the cooling medium supplied to the respective battery modules, thereby maximizing the performance of the battery pack.

In addition, according to one aspect of the present disclosure, since the cooling medium is supplied to the respective battery modules using insertion ports of the same size, it is easy to change design and productivity may be improved in manufacturing the battery pack.

In addition, according to one aspect of the present disclosure, in manufacturing the battery pack, the possibility of mixture may be reduced when assembling battery modules into the battery pack, thereby improving assembly efficiency and reducing costs and time.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is an overall perspective view of a battery pack according to an embodiment of the present disclosure.
FIG. 2 is an exploded perspective view of primary elements of a battery pack according to an embodiment of the present disclosure.
FIG. 3 is a perspective view schematically illustrating a battery pack according to an embodiment of the present disclosure.
FIG. 4 is an enlarged view of part A in FIG. 3.
FIG. 5 is an enlarged view of part B in FIG. 4.
FIG. 6 is a modified diagram of FIG. 5, which illustrates an insertion pipe included in a battery pack according to an embodiment of the present disclosure.
FIG. 7 is a cross-sectional view on the X-Z plane in FIG. 6.
FIG. 8 is a cross-sectional view of a battery pack on the X-Z plane according to an embodiment of the present disclosure.
FIG. 9 is a diagram illustrating a modified example of an insertion pipe.
FIG. 10 is a diagram illustrating another modified example of an insertion pipe.
FIG. 11 is a perspective view of a battery pack including a cross-section of a connector on the X-Y plane, which is included in the battery pack, according to another embodiment of the present disclosure.
FIG. 12 is a cross-sectional view on the X-Z plane in FIG. 11.
FIG. 13 is a cross-sectional view of a battery pack on the X-Z plane according to another embodiment of the present disclosure.
FIG. 14 is a perspective view of a battery pack including a cross-section of a connector on the X-Y plane, which is included in the battery pack, according to another embodiment of the present disclosure.
FIG. 15 is a perspective view schematically illustrating a vehicle including the battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted. For reference, in this specification, terms indicating directions are based on the elements shown in the attached drawings, and are relative terms that may vary depending on the postures or positions of the actual elements.

Meanwhile, although terms indicating directions such as upward, downward, left, right, forward, and backward directions are used in this specification, it is obvious to those skilled in the art that these terms are only for convenience of explanation and may vary depending on the position of the target object or the position of the observer.

For example, in the embodiment of the present disclosure, the X-axis direction shown in the drawing may indicate the horizontal direction or forward-backward direction, the Y-axis direction may indicate the left-right direction perpendicular to the X-axis direction on the horizontal plane (X-Y plane), and the Z-axis direction may indicate the upward-downward direction (vertical direction) perpendicular to both the X-axis direction and the Y-axis direction.

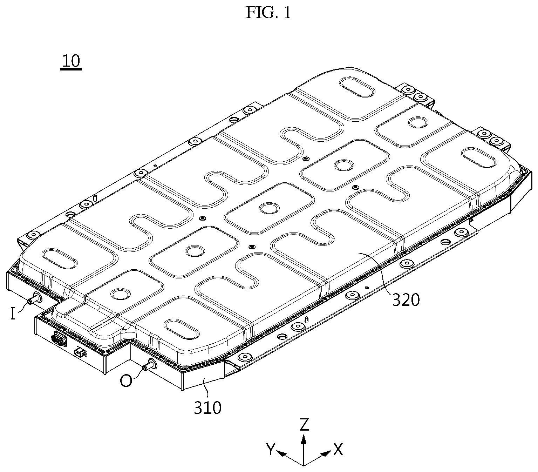

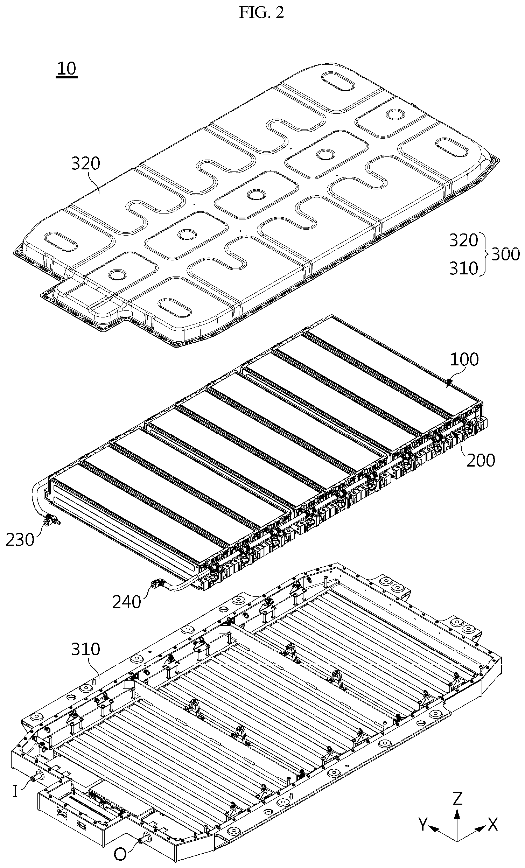

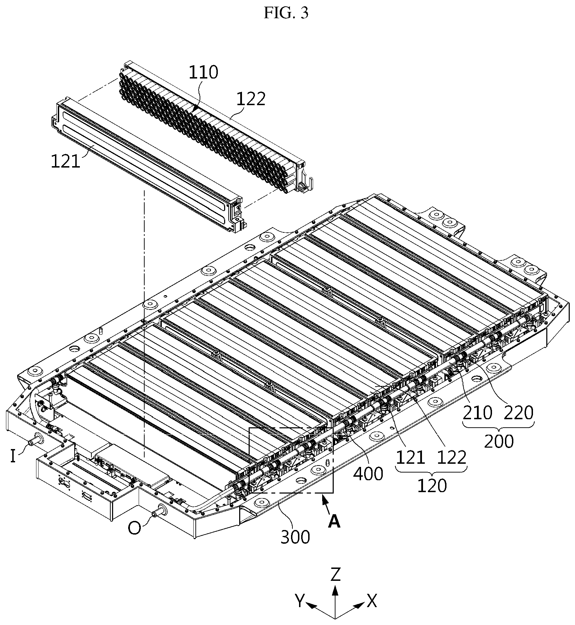

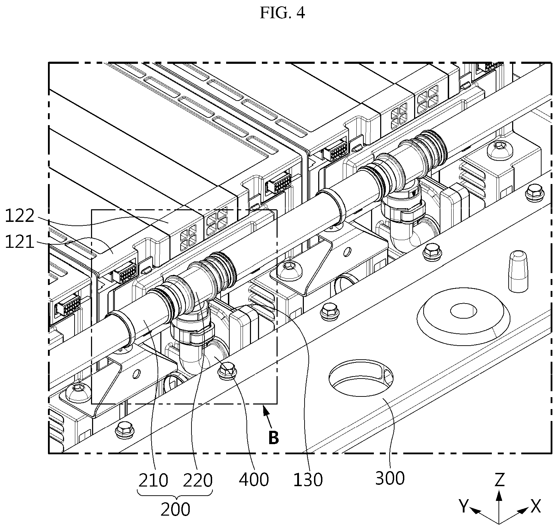

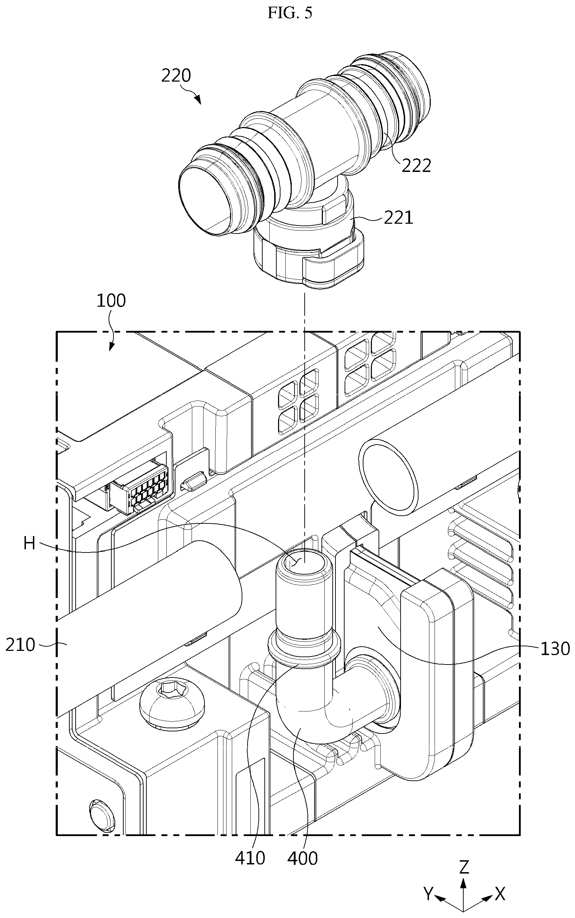

FIG. 1 is an overall perspective view of a battery pack according to an embodiment of the present disclosure, FIG. 2 is an exploded perspective view of primary elements of a battery pack according to an embodiment of the present disclosure, and FIG. 3 is a perspective view schematically illustrating a battery pack according to an embodiment of the present disclosure. In addition, FIG. 4 is an enlarged view of part A in FIG. 3, and FIG. 5 is an enlarged view of part B in FIG. 4.

Referring to FIGS. 1 to 5, a battery pack 10 according to an embodiment of the present disclosure includes a battery module 100, a cooling pipe assembly 200, and an insertion port 400.

The battery module 100 may include a plurality of battery cells 110. Any type of secondary battery, such as a prismatic, cylindrical, or pouch-type battery cell, may be applied to the battery cell 110, and the present embodiment, as shown in FIG. 3, shows an example in which the battery cell 110 is configured as a cylindrical battery cell.

The plurality of battery cells 110 may be arranged in columns and rows inside the battery module 100. For example, as shown in FIG. 3, the plurality of battery cells 110 may be arranged side by side in the left-right direction (Y-axis direction) and the upward-downward direction (Z-axis direction) while lying down in the horizontal direction (X-axis direction). In this case, the plurality of battery cells 110 may be electrically connected to each other. According to an embodiment, each of a plurality of battery modules 100 may include battery cells 110 disposed in two rows in the horizontal direction (X-axis direction).

A plurality of battery modules 100 including a plurality of battery cells 110 may be provided in the battery pack 10. For example, the plurality of battery modules 100 may be arranged side by side in the horizontal direction (X-axis direction), as shown in FIGS. 2 and 3.

Meanwhile, referring to FIGS. 2 to 4, the cooling pipe assembly 200 may be configured to supply a cooling medium to the respective battery modules 100.

Referring to FIGS. 3 to 5, the insertion port 400 may be configured to connect the plurality of battery modules 100 and the cooling pipe assembly 200 to each other. A plurality of insertion ports 400 may be provided to connect the respective battery modules 100 and the cooling pipe assembly 200. The insertion port 400 may be configured to be coupled to the cooling pipe assembly 200. Specifically, the insertion port 400 may be configured to be inserted and coupled to the cooling pipe assembly 200. The insertion port 400 may be configured to communicate with the cooling pipe assembly 200 such that the cooling medium supplied from the cooling pipe assembly 200 may flow therethrough. Accordingly, the cooling medium supplied from the cooling pipe assembly 200 may flow to the battery modules 100 through the insertion ports 400.

The insertion port 400 may be configured in a hollow shape including an outer wall and an inner wall. The outer diameter of the insertion port 400 may be the same as the inner diameter of the portion of the cooling pipe assembly 200 into which the insertion port 400 is inserted.

Referring to FIG. 5, in the case where the insertion port 400 is coupled to the cooling pipe assembly 200, a connection hole H may be formed in the cooling pipe assembly 200. The connection hole H may be defined as a portion where the cooling pipe assembly 200 communicates with the insertion port 400. For example, in FIG. 5, the connection hole H may be defined as the end of the insertion port 400. The connection hole H may be formed in each of the plurality of insertion ports 400.

The connection holes H may have different cross-sectional areas from each other so as to equalize flow rates of the cooling medium supplied to the respective battery modules 100 through the connection holes H. The flow rate of the cooling medium flowing into one connection hole H is proportional to the product of the flow speed of the cooling medium at that position and the cross-sectional area of the connection hole H. The flow speed of the cooling medium in the connection hole H may vary depending on the positions of the connection holes H in the battery pack 10. In such a case, the cross-sectional area of the connection hole H may differ between the respective positions to equalize the flow rates of the cooling medium, regardless of the positions inside the battery pack 10.

For example, the cross-sectional area of the connection hole H may be configured to differ between the respective insertion ports 400. Here, the cross-sectional area may be defined as the cross-sectional area of the battery pack 10 cut in the horizontal direction, that is, the cross-sectional area on the X-Y plane. That is, the diameter of the connection hole H may be configured to be different between the respective insertion ports 400. This is due to the fact that the cross-sectional area of the connection hole H is proportional to the square of (diameter/2) of the connection hole H.

That is, the diameters of the connection holes H communicating with the insertion ports 400 provided in the plurality of battery modules 100 may be configured to be different from each other such that the flow rates of the cooling medium supplied to the respective battery modules 100 are equalized. According to this implemented configuration, the flow rates of the cooling medium flowing into the respective battery modules 100 may be adjusted, so that the cooling medium may be evenly distributed to the respective battery modules 100.

In this case, even if the cross-sectional area of the connection hole H differs, the outer diameter of the insertion port 400 may remain constant. As a result, when the cooling medium flows into the insertion port 400 through the connection hole H, the insertion port 400 may remain in the coupling state to the cooling pipe assembly 200.

According to the above-implemented configuration of the present disclosure, it is possible to evenly distribute the cooling medium flowing into the respective battery modules 100 when the battery cells 110 generate heat, thereby lowering the temperature of the battery cells 110 and increasing the lifespan of the battery cells 110.

In addition, according to the implemented configuration of the present disclosure, it is possible to minimize temperature differences between the battery modules 100 by equalizing the flow rates of the cooling medium supplied to the respective battery modules 100, thereby maximizing the performance of the battery pack 10.

Meanwhile, referring to FIGS. 2 and 3, the battery module 100 may include a module frame 120 in order to maintain a plurality of battery cells 110 as a single unit. The module frame 120 may be configured to maintain the distances between the battery cells 110. The module frame 120 may be made of, for example, a metal material or a plastic material. The module frame 120 may have holes into which the plurality of battery cells 110 are inserted.

The module frame 120 may include a module-top frame 121 and a module-bottom frame 122.

The module-top frame 121 may maintain the distances between the battery cells 110 at the top of the plurality of battery cells 110. The module-top frame 121 may have holes into which the upper portions of the plurality of battery cells 110 are inserted.

In addition, a plurality of battery cells 110 may be mounted to the module-bottom frame 122. The module-bottom frame 122 may be provided at the bottom of the plurality of battery cells 110 such that the plurality of battery cells 110 is mounted and fixed thereto. The module-bottom frame 122 may have a structure into which the lower portions of the plurality of battery cells 110 are inserted.

As shown in FIGS. 2 and 3, two module-bottom frames 122 may be provided to face each other in one battery module 100.

Meanwhile, referring to FIGS. 3 and 4, according to an embodiment of the present disclosure, the cooling pipe assembly 200 may include a cooling pipe 210 and a connector 220.

The cooling pipe 210 may be configured to have a hollow such that the cooling medium may flow therethrough. A plurality of cooling pipes 210 may be provided and disposed on both sides of the plurality of battery modules 100. In addition, the plurality of cooling pipes 210 may be arranged in a row. For example, as shown in FIG. 3, the plurality of cooling pipes 210 may be configured as pipes having a "-" shape and arranged in a row along the forward-backward direction (X-axis direction), and may be provided to face each other on both sides of the plurality of battery modules 100.

The connector 220 may be configured such that two adjacent cooling pipes 210 are coupled thereto, among the plurality of cooling pipes 210. In addition, the connector 220 may be configured to be coupled to the insertion port 400. That is, the connector 220 may be configured to couple to both at least one cooling pipe 210 and the insertion port 400.

A plurality of connectors 220 may be provided and arranged in a row. In addition, the connectors 220 may be disposed on both sides of the plurality of battery modules 100. For example, as shown in FIG. 3, the plurality of cooling pipes 210 may be disposed in a row in the forward-backward direction (X-axis direction) and may be provided to face each other on both sides of the plurality of battery modules 100.

The connection holes H may be configured such that the plurality of connectors 220 respectively communicate with the plurality of insertion ports 400. That is, the connection holes H may be formed at portions of the plurality of connectors 220 where the insertion ports 400 are respectively coupled. In this case, the cross-sectional areas of the connection holes H may be configured differently such that the amount of cooling medium flowing from the connector 220 is equalized.

According to the above-implemented configuration, even if the inner diameters of the insertion ports 400 inserted into the connectors 220 are the same, it is possible to equalize the flow rates of the cooling medium flowing into the respective battery modules 100 by configuring the cross-sectional areas of the connection holes H to be different from each other. As a result, the insertion port 400 having a specific size may be used for each battery module 100, making it easy to change the design and improving productivity.

Meanwhile, in the implemented configuration shown in FIGS. 1 to 3, the battery pack 10 according to an embodiment of the present disclosure may further include a pack case 300.

The pack case 300 may be configured to accommodate the plurality of battery modules 100 and the cooling pipe assembly 200. To this end, the pack case 300 may include case frame 310 including a rectangular bottom surface that forms the lower surface of the pack case 300 and has the plurality of battery modules 100 seated thereon and side surfaces that extend upward from the edge of the bottom surface to surround the plurality of battery modules 100. For example, in the present embodiment configuration, the bottom surface may be configured in a substantially rectangular plate, and the side surfaces may include walls in the X-axis direction and Y-axis direction.

In addition, the pack case 300 may include a pack lid 320 configured to cover the top of the case frame 310.

The plurality of connectors 220 and the insertion ports 400 may be arranged in one direction of the pack case 300. For example, as shown in FIG. 3, one direction of the pack case 300 may be defined as the +X axis direction.

The cross-sectional area of the connection hole H may increase in one direction of the pack case 300. For example, as shown in FIG. 3, the cross-sectional area of the connection hole H may increase toward the +X-axis direction. That is, the cross-sectional area of the connection hole H provided on one side of the pack case 300 may be greater than the cross-sectional area of the connection hole H provided on the other side of the pack case 300.

Referring to FIGS. 2 and 3, the cooling pipe assemblies 200 may be provided in pairs so as to face each, based on the plurality of battery modules 100. For example, as in the implemented configuration shown in FIG. 3, a plurality of cooling pipes 210 and connectors 220 may be provided to face each other on both sides of the plurality of battery modules 100 to be symmetrical to each other about the Y-axis.

The cooling pipe assembly 200 may include an inlet port 230 and an outlet port 240. Both the inlet port 230 and the outlet port 240 may be provided on one side, for example, the front side, of the pack case 300. The inlet port 230 may be configured such that a cooling medium flows thereinto. The outlet port 240 may be provided to face the inlet port 230. The outlet port 240 may be configured to discharge the cooling medium. The inlet port 230 and the outlet port 240 may be provided to communicate with the cooling pipe 210.

Meanwhile, the pack case 300 may include an inlet I through which the cooling medium is introduced from the outside and an outlet O through which the cooling medium is discharged to the outside. The inlet I and outlet O may be configured to be connected to the inlet port 230 and the outlet port 240, respectively.

The cross-sectional area of the connection hole H may increase as it is farther from the inlet port 230 or outlet port 240. For example, as shown in FIG. 3, the inlet port 230 and the outlet port 240 may be provided on one side, for example, the front side, of the pack case 300, and the cross-sectional area of the connection hole H may be configured to increase toward one direction (+X-axis direction) of the pack case 300.

In the case where the insertion ports 400 have the same inner diameter, the farther the battery module 100 is from the inlet I or outlet O of the pack case 300, the slower the flow speed of the cooling medium flowing into the battery module 100 becomes, thereby gradually reducing the flow rate. According to the implemented configuration of the present disclosure, since the cross-sectional area of the connection hole H becomes larger as it is farther from the inlet port 230 or outlet port 240, the flow rates of the cooling medium flowing into respective battery modules 100 may be equalized, regardless of the distances between the respective battery modules 100 and the inlet I or outlet O. As a result, the temperature difference between the battery modules 100 may be minimized to improve the safety of the battery pack 10.

Referring to FIG. 4, each of the plurality of battery modules 100 according to an embodiment of the present disclosure may further include a heat sink 130.

The heat sink 130 may be configured to cool the plurality of battery cells 110 or battery modules 100. The heat sink 130 may be configured between a plurality of module frames 120. For example, two module-bottom frames 122 may be configured to face each other in one battery module 100, and the heat sink 130 may be provided between the two module-bottom frames 122. The heat sink 130 may be provided closer to the bottom of the pack case 300 than the top thereof. In this case, the insertion port 400 may be configured in an L-shape to connect the heat sink 130 provided at the bottom and the connector 220.

The insertion port 400 may be configured to connect the heat sink 130 and each of the plurality of connectors 220, so that the cooling medium flowing through the cooling pipe assembly 200 may flow into the respective battery modules 100. According to this implemented configuration, the cooling medium may flow directly into the heat sink 130, thereby lowering the temperature of each battery module 100 quickly when heat is generated.

Referring to FIG. 5, each of the plurality of connectors 220 may include a port insertion portion 221 and a pipe insertion portion 222.

The port insertion portion 221 may be configured such that the insertion port 400 is inserted thereinto. The inner diameter of the port insertion portion 221 may be the same as or similar to the outer diameter of the insertion port 400.

The pipe insertion portion 222 may be configured to communicate with the port insertion portion 221. The pipe insertion portion 222 may be configured such that at least one of the plurality of cooling pipes 210 is coupled thereto. Specifically, the outer diameter portion of the pipe insertion portion 222 may be inserted into the inner diameter portion of the cooling pipe 210. In this case, the outer diameter of the pipe insertion portion 222 may be greater than the inner diameter of the cooling pipe 210, so that the cooling pipe 210 may be inserted and press-fitted into the pipe insertion portion 222. As a result, leakage may be prevented when the cooling medium flows through the cooling pipe 210 and the pipe insertion portion 222.

In addition, for example, the plurality of cooling pipes 210 may be inserted into both ends of the pipe insertion portions 222. That is, the plurality of connectors 220 may be configured such that both at least one cooling pipe 210 and the insertion port 400 are coupled thereto. According to an embodiment, as shown in FIG. 5, the connector 220 may be configured in a T-shape such that two cooling pipes 210 are inserted into both ends in the X-axis direction and such that the insertion port 400 is inserted thereinto in the Z-axis direction.

The port insertion portion 221 may have a connection hole H formed therein. That is, the connection hole H may be formed at a portion where the port insertion portion 221 and the insertion port 400 communicate with each other.

Meanwhile, referring to FIG. 5, the insertion port 400 may include a hooking portion 410. The hooking portion 410 may be configured such that at least a portion of the outer wall of the insertion port 400 protrudes outward. The hooking portion 410 may be configured to be hooked on the end of the port insertion portion 221. That is, the outer diameter of the hooking portion 410 may be greater than the inner diameter of the port insertion portion 221. Accordingly, when the insertion port 400 is inserted into the port insertion portion 221, the insertion depth may be adjusted.

According to an embodiment of the present disclosure, as shown in FIG. 5, the insertion port 400 may be coupled upward to the port insertion portion 221 from below. When the insertion port 400 is coupled upward to the port insertion portion 221, the lower end of the port insertion portion 221 may be supported by the hooking portion 410. According to this implemented configuration, the insertion port 400 may be inserted only to a certain depth into the port insertion portion 221, so that the cooling medium may smoothly flow into the insertion port 400 through the connection hole H.

Hereinafter, several embodiments capable of equalizing the flow rates of the cooling medium flowing into the respective battery modules 100 by configuring the cross-sectional areas of the connection holes H to be different from each other with the same inner diameter of the insertion ports 400 will be described.

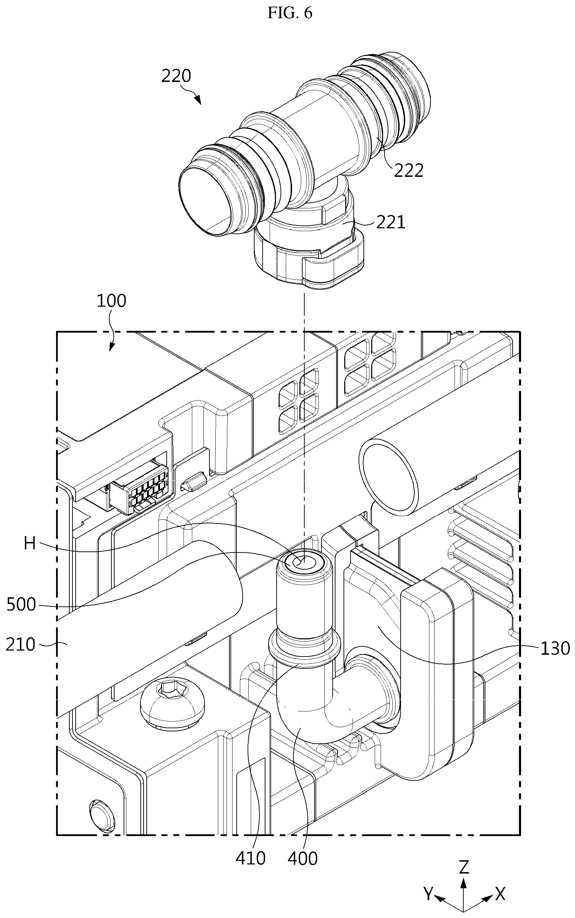

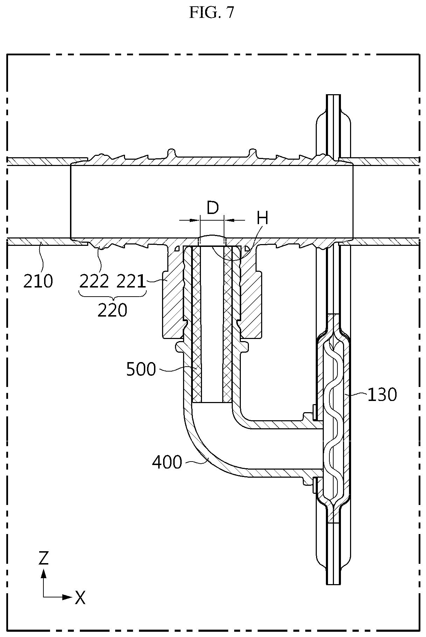

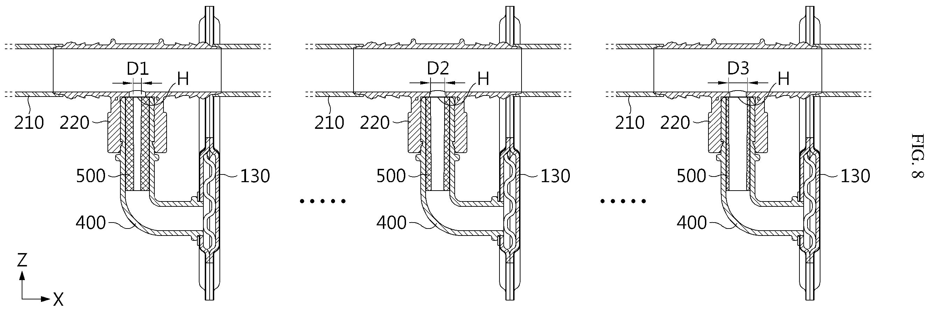

FIG. 6 is a modified diagram of FIG. 5, which illustrates an insertion pipe included in a battery pack according to an embodiment of the present disclosure, FIG. 7 is a cross-sectional view on the X-Z plane in FIG. 6, and FIG. 8 is a cross-sectional view of a battery pack on the X-Z plane according to an embodiment of the present disclosure.

According to an embodiment of the present disclosure, as shown in FIGS. 6 and 7, the battery pack 10 according to an embodiment of the present disclosure may further include an insertion pipe 500. The insertion pipe 500 may be configured to be inserted into the insertion port 400. The insertion pipe 500 may be configured as a pipe having an outer wall and an inner wall. The outer diameter of the insertion pipe 500 may be the same as or similar to the inner diameter of the insertion port 400.

The insertion pipe 500 may be configured such that the connection holes H have different cross-sectional areas. In this case, the connection hole H may be formed at a portion where the connector 220 and the insertion pipe 500 communicate with each other. The cross-sectional area of the insertion pipe 500 may differ between the respective insertion ports 400 into which the insertion pipes 500 are inserted, thereby equalizing the flow rates of the cooling medium flowing through the connection holes H. Even though the cross-sectional areas of the connection holes H are different, the outer diameters of the insertion pipes 500 may be the same. That is, the cross-sectional area or inner diameter of the insertion pipe 500 inserted into the insertion port 400 differs such that the connection holes H have different cross-sectional areas.

Meanwhile, as shown in FIGS. 6 and 7, the insertion pipe 500 may be inserted downward (in the -Z-axis direction) from the top of the insertion port 400.

According to this implemented configuration, as the cross-sectional area or inner diameter of the insertion pipe 500 inserted into the insertion port 400 is configured differently, the insertion ports 400 may be manufactured to have the same size without varying the inner diameters of the insertion ports 400, regardless of the positions of respective battery modules 100, thereby minimizing the problem in which modules are mixed during assembly and improving assembly efficiency.

In addition, according to this implemented configuration, after assembling the battery modules 100 and the insertion ports 400 to the pack case 300, insertion pipes 500 having a predetermined inner diameter may be inserted into the insertion ports 400 depending on the positions of respective battery modules 100, so the productivity may be improved when assembling the battery pack 10.

In the case where the flow rates are controlled by varying the inner diameters of the respective insertion ports 400, insertion ports 400 having various inner diameters must be developed, and the insertion ports are likely to mix with each other when assembling the battery modules 100 to the battery pack 10. According to the present disclosure, the insertion ports 400 may be configured to have the same inner diameter, instead of various inner diameters, and the insertion pipes 500 having different sizes may be inserted into the insertion ports 400, thereby obtaining the effect of different cross-sectional areas of the connection holes H. In this case, after assembling all the battery modules 100 into the pack case 300, different insertion pipes 500 may be inserted into the insertion ports 400 of the respective battery modules 100, avoiding the problem with the mixture of the insertion pipes for the battery modules 100.

The inner diameter D of the insertion pipe 500 may increase in one direction of the pack case 300. That is, the inner diameter of the insertion pipe 500 may increase in the +X-axis direction. The +X-axis direction may be defined as a direction away from the inlet I or outlet O. Accordingly, the diameter of the connection hole H may also increase in one direction of the pack case 300. That is, the inner diameter of the insertion pipe 500 may be configured to be the same as the diameter of the connection hole H.

Referring to FIG. 8, the inner diameter D1 of the insertion pipe 500 inserted into the insertion port 400 connected to the battery module 100 provided closest to the inlet I or outlet O may be the smallest. In addition, the inner diameter D3 of the insertion pipe 500 inserted into the insertion port 400 connected to the battery module 100 provided farthest from the inlet I or outlet O may be greater than D1.

As the battery module 100 is farther from the inlet I or outlet O of the pack case 300, the flow rate of the cooling medium flowing into the battery module 100 may be reduced. In the implemented configuration of the present disclosure, since the inner diameter of the insertion pipe 500 becomes larger as it is farther from the inlet I or outlet O, the cross-sectional area of the connection hole H also becomes larger, so that the flow rates of the cooling medium into the respective battery modules 100 may be equalized.

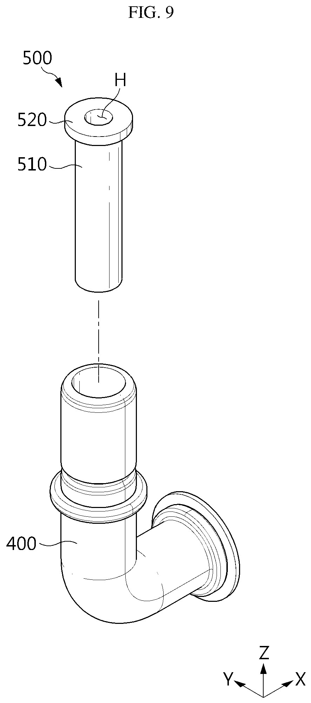

FIG. 9 is a diagram illustrating a modified example of an insertion pipe.

Referring to FIG. 9, the insertion pipe 500 may include a body portion 510 and a seating portion 520.

The body portion 510 may be a portion inserted into the insertion port 400. The body portion 510 may be configured in the shape of a pipe, so that the outer diameter of the body portion 510 may be the same as the inner diameter of the insertion port 400. The inner diameter of the body portion 510 may increase in one direction of the pack case 300. That is, the inner diameter of the body portion 510 may increase toward the +X-axis direction.

The seating portion 520 may extend from the body portion 510 and have a plate shape. The seating portion 520 may have a hole formed to allow the cooling medium to pass therethrough. The diameter of the hole may be the same as the inner diameter of the body portion 510. Accordingly, when the insertion pipe 500 is inserted into the insertion port 400, the connection hole H may be defined as the hole.

Referring to FIG. 9, the seating portion 520 may be configured to extend from the upper portion of the body portion 510 in the outer diameter direction of the insertion port 400 and be seated on the upper end of the insertion port 400. Although the outer diameter of the seating portion 520 is greater than the diameter of the hole, it may not extend beyond the outermost wall of the insertion port 400.

In addition, the thickness of the seating portion 520 may be much smaller than that of the body portion 510. Even if the inner diameter of the body portion 510 differs between the respective insertion pipes 500, the thickness of the seating portion 520 may remain constant. Accordingly, the flow of the cooling medium flowing from the connector 220 to the body portion 510 may not be interrupted.

According to this implemented configuration, when the body portion 510 of the insertion pipe 500 is inserted into the insertion port 400, the seating portion 520 may be seated on the insertion port 400, so that the insertion depth of the body portion 510 into the insertion port 400 may be determined. In addition, according to this implemented configuration, even if the insertion pipe 500 is incorrectly assembled to the insertion port 400, the insertion pipe 500 may be easily removed by gripping the seating portion 520.

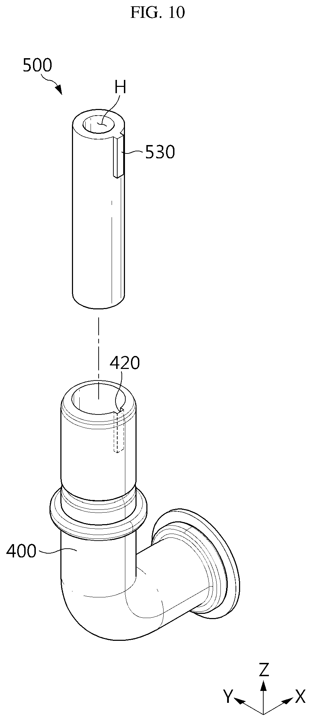

FIG. 10 is a diagram illustrating another modified example of an insertion pipe.

Referring to FIG. 10, the insertion pipe 500 may include a guide protrusion 530. The guide protrusion 530 may be formed on the outer wall of the insertion pipe 500. Specifically, the guide protrusion 530 may be configured such that at least a portion of the outer wall of the insertion pipe 500 protrudes outward. The guide protrusion 530 may be formed continuously or intermittently in the longitudinal direction (Z-axis direction) of the insertion pipe 500. For example, a plurality of guide protrusions 530 may be formed radially on the outer wall of the insertion pipe 500. The length of the guide protrusion 530 may be smaller than the length by which the insertion pipe 500 is inserted into the insertion port 400. For example, as in the implemented shown in FIG. 10, the guide protrusion 530 may be configured to be smaller than the length from the end of the insertion port 400 to the hooking portion 410.

Meanwhile, the insertion port 400 may include a guide groove 420 into which the guide protrusion 530 is inserted. The guide groove 420 may be formed on the inner wall of the insertion port 400. Specifically, the guide groove 420 may be configured such that at least a portion of the inner wall of the insertion port 400 is recessed. The recessed depth and position of the guide groove 420 may be configured to correspond to those of the guide protrusion 530.

In addition, the guide groove 420 may be configured such that the guide protrusion 530 is slidably coupled thereto from above. The guide groove 420 may be formed continuously in the longitudinal direction (Z-axis direction) of the insertion port 400. The guide groove 420 may be formed to correspond to a certain portion of the insertion port 400 in the longitudinal direction, that is, the length of the guide protrusion 530. In this case, the guide groove 420 may be provided with a stopper that supports the end of the guide protrusion 530.

According to this implemented configuration, when the insertion pipe 500 is inserted into the insertion port 400, the lower end of the guide protrusion 530 may come into contact with the stopper of the guide groove 420, thereby determining the depth at which the insertion pipe 500 is inserted.

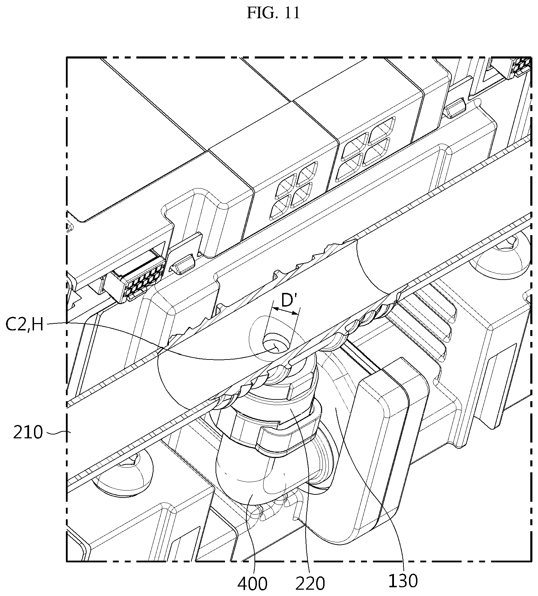

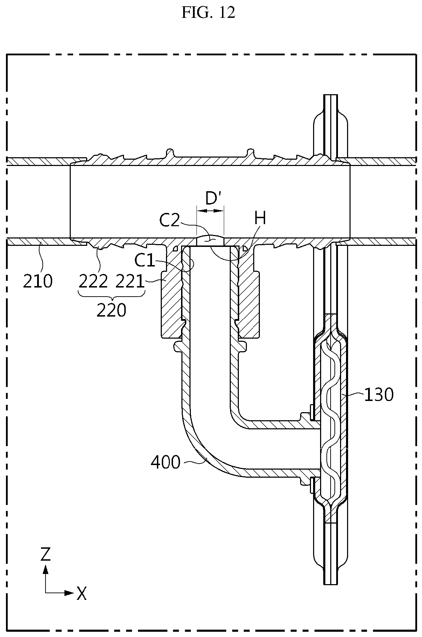

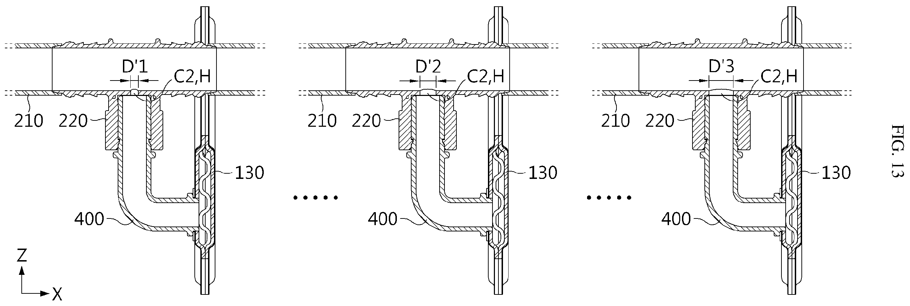

FIG. 11 is a perspective view of a battery pack including a cross-section of a connector on the X-Y plane, which is included in the battery pack, according to another embodiment of the present disclosure, FIG. 12 is a cross-sectional view on the X-Z plane in FIG. 11, and FIG. 13 is a cross-sectional view of a battery pack on the X-Z plane according to another embodiment of the present disclosure.

According to another embodiment of the present disclosure, as shown in FIG. 12, the port insertion portion 221 may have a first connector hole C1 and a second connector hole C2. The first connector hole C1 may be defined as a portion where the insertion port 400 is inserted and where the end of the insertion port 400 is located. The second connector hole C2 may be provided at a portion extending from the first connector hole C1 in the insertion direction of the insertion port 400. The insertion port 400 is not inserted into the second connector hole C2, which may be defined as the remaining portion of the port insertion portion 221, excluding the first connector hole C1.

In this case, the connection hole H may be defined as a portion where the second connector hole C2 of the connector 220 and the insertion port 400 communicate with each other. That is, the connection hole H may be defined as the second connector hole C2. The second connector hole C2 may be configured such that the cross-sectional area of the connection hole H differ between the respective insertion ports 400. For example, as in the embodiment shown in FIG. 13, the cross-sectional area of the second connector hole C2 may increase in one direction of the pack case 300. Accordingly, the diameter of the connection hole H may also increase in one direction of the pack case 300. That is, the inner diameter D' of the second connector hole C2 may be configured to be the same as the diameter of the connection hole H.

Compared to the inner diameter D' of the second connector hole C2 provided on one side of the pack case 300, the inner diameter D' of the second connector hole C2 provided on the other side of the pack case 300 may be larger. That is, as shown in FIG. 13, the inner diameter D'1 of the second connector hole C2 formed in the connector 220 provided closest to the inlet I or outlet O may be the smallest. In addition, the inner diameter D'3 of the second connector hole C2 formed in the connector 220 that is farthest from the inlet I or outlet O may be greater than D'1.

According to this implemented configuration, since the cross-sectional area or inner diameter D' of the second connector hole C2, which is the portion where the insertion port 400 is not inserted, is configured differently, the cross-sectional area of the connection hole H is also configured differently, so the flow rates of the cooling medium flowing into the respective battery modules 100 may be equalized, regardless of the positions of the respective battery modules 100. Accordingly, since only the insertion ports 400 of the same size need to be manufactured without varying the outer diameter of the port insertion portion 221 of the connector 220 into which the insertion port 400 is inserted or the outer diameter and inner diameter of the insertion port 400, productivity may be improved. In addition, according to this implemented configuration, since the insertion port 400 needs to be developed in only one size, it may be easy to change the design of the battery modules 100 or insertion ports 400.

As described above, in the present embodiment, the inner diameter D' of the second connector hole C2, which is the portion where the insertion port 400 is not inserted, may be configured differently, thereby obtaining the effect of differentially applying the cross-sectional area of the connection hole H depending on the positions of the battery modules 100 in the battery pack 10.

Specifically, results of actually analyzing the flow rates of the cooling medium flowing into the heat sinks 130 of the respective battery modules 100 are as follows. The flow analysis was performed through the commercial STAR-CCM+ program, which is commonly used in CFD flow analysis. A 3D steady state and gravity of 9.81m/s² in the - Z-axis direction were considered, and realizable k-ε was applied as the turbulence model. The actual flow analysis experiment was performed using nine battery modules 100, as shown in FIG. 2, and the total flow rate of the cooling medium was set to 10 LPM. That is, the uniform flow rate of the cooling medium flowing into each of the nine battery modules 100 must be 1.11 LPM (11.1%) obtained from 10 LPM/9 in order to maximize the performance of the battery pack including the battery modules 100.

First, in a comparative example assuming that the inner diameters D' of the second connector holes C2 of the connectors 220 are all the same of 14.15 mm, as a result of calculating the flow rates of the cooling medium flowing into the respective battery modules 100, the amount of cooling medium flowing into the respective battery modules 100 was 16.5%, 14.5%, 12.8%, 11.3%, 10.3%, 9.4%, 8.7%, 8.3%, and 8.2% in sequence from the battery module 100 provided close to the inlet I or outlet O. In this case, the amount of cooling medium was gradually reduced from the battery module 100 provided closest to the inlet I or outlet O to the battery module 100 provided farthest from the inlet I or outlet O, resulting in uneven flow rates. The flow rate difference, which is a difference between the maximum flow rate and the minimum flow rate, is 16.5% - 8.2% = 8.3% (0.83 LPM) in the comparative example.

On the other hand, for example, in the case where the inner diameters D' of the second connector holes C2 of the connectors 220 increase to 5.8 mm, 6.3mm, 6.8mm, 7.3mm, 8.3mm, 9.3mm, 11.5mm, 12.5mm, and 14.2mm in sequence from the battery module 100 provided close to the inlet I or outlet O, as a result of calculating the flow rates of the cooling medium flowing into the respective battery modules 100, the amount of cooling medium flowing into the respective battery modules 100 was 11.0%, 11.1%, 11.3%, 11.1%, 11.6%, 11.5%, 11.2%, 10.7%, and 10.5%, respectively. In this case, unlike the comparative example, the amount of cooling medium was not reduced from the battery module 100 provided closest to the inlet I or outlet O to the battery module 100 provided farthest from the inlet I or outlet O, resulting in uniform flow rates. As described above, differential application of the inner diameters D' of the second connector holes C2 of the connectors 220 corresponds to the present disclosure, and in this case, the flow rate difference is 11.6% - 10.5% = 1.1% (0.11 LPM). That is, since the flow rate difference of 1.1% according to the present disclosure, in which the inner diameters D' of the second connector holes C2 of the connectors 220 are differently applied, is significantly smaller than the flow rate difference of 8.3% in the comparative example in which the inner diameters D' of the second connector holes C2 of the connectors 220 are the same, the present disclosure may minimize the temperature difference between the battery modules 100.

Unlike the actual flow analysis experiment, the inner diameters D' of the second connector holes C2 of the connectors 220 may vary to further equalize the flow rates of the cooling medium flowing into the respective battery modules 100, and the optimal size may be found through the flow analysis experiments.

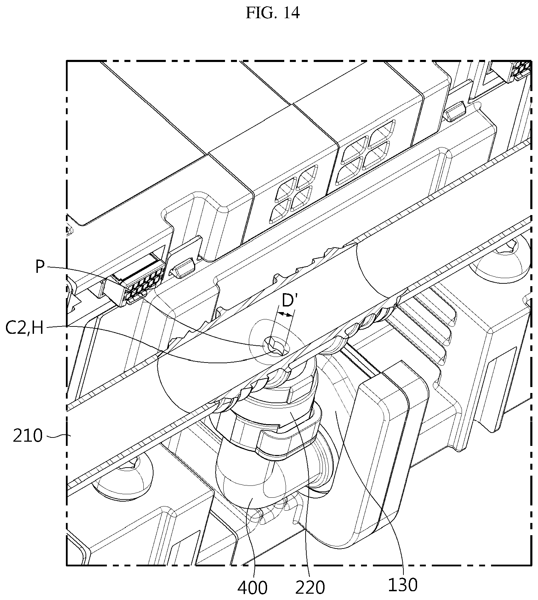

FIG. 14 is a perspective view of a battery pack including a cross-section of a connector on the X-Y plane, which is included in the battery pack, according to another embodiment of the present disclosure.

According to another embodiment of the present disclosure, the port insertion portion 221 may further include a protrusion P. The protrusion P may be configured to protrude inward from at least a portion of the second connector hole C2. The protrusion P may be configured in an annular shape along the inner circumferential surface of the second connector hole C2. As the protrusion P is provided, the diameter or cross-sectional area of the connection hole H may be changed by the protrusion P without changing the inner diameter of the second connector hole C2 itself.

Specifically, the protrusions P may have lengths protruding from the second connector hole C2, which gradually become smaller in one direction of the pack case 300. That is, the cross-sectional area of the second connector hole C2 blocked by the protrusion P may gradually become smaller in one direction of the pack case 300. Accordingly, the cross-sectional area of the second connector hole C2 may increase in one direction of the pack case 300. According to this configuration, there may be the effect in which the cross-sectional areas of the connection holes H are differentially configured so that the flow rates of the cooling medium supplied to the plurality of battery modules 100 through the connection holes H are equalized.

According to an embodiment shown in FIG. 14, one or more protrusions P may be provided. The protrusions P may be provided intermittently on the inner circumferential surface of the second connector hole C2. In the case where a plurality of protrusions P are configured and the areas of the plurality of protrusions P are the same, the number of protrusions P may be reduced in one direction of the pack case 300. Alternatively, in the case where the areas of the plurality of protrusions P are the same, the gap between the protrusions P may be increased in one direction of the pack case 300. According to this configuration, there may be the effect in which the cross-sectional areas of the connection holes H are differently configured so that the flow rates of the cooling medium supplied to the plurality of battery modules 100 through the connection holes H are equalized.

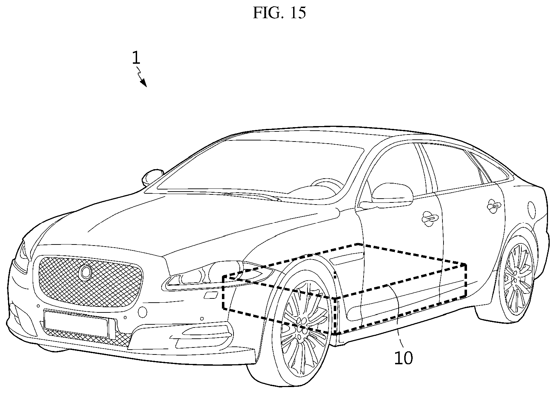

FIG. 15 is a perspective view schematically illustrating a vehicle including the battery pack according to an embodiment of the present disclosure.

Referring to FIG. 15, a vehicle 1 according to an embodiment of the present disclosure may include one or more battery packs 10 according to an embodiment of the present disclosure. The vehicle 1 according to the present disclosure may be, for example, an electric vehicle, a hybrid vehicle, or a plug-in hybrid vehicle. The vehicle 1 includes a four-wheeled vehicle and a two-wheeled vehicle. The vehicle 1 drives by receiving power from the battery pack 10 according to an embodiment of the present disclosure.

Since the battery pack 10 has the various effects mentioned above, the vehicle 1 including the same may also have those effects. Specifically, the battery pack 10 may lower the temperature of the battery cells 110 when the battery cells 110 generate heat by evenly supplying a cooling medium to respective battery modules 100. In addition, the temperature difference between the battery cells 110 or battery modules 100 may be minimized. The battery pack 10 may be used without limiting battery output due to some battery cells 110 quickly reaching an allowable temperature. Accordingly, all battery cells 110 in the battery pack 10 may be used with the maximum performance, and the use period of the battery pack 10 may be extended to prolong the replacement cycle, thereby facilitating maintenance of the vehicle 1 including the same.

As described above, although the present disclosure has been described with reference to limited embodiments and drawings, the present disclosure is not limited thereto, and various modifications and variations are possible inside the technical idea of the present disclosure and the scope of equivalence of the claims to be described below by those skilled in the art to which the present disclosure pertains.

## Claims

1. A battery pack comprising:
a plurality of battery modules comprising a plurality of battery cells;
a cooling pipe assembly configured to supply a cooling medium to the respective battery modules; and
a plurality of insertion ports configured to connect the respective battery modules and the cooling pipe assembly to each other,
wherein the cooling pipe assembly has
connection holes formed on the respective insertion ports so as to communicate with the insertion ports, and having the cross-sectional areas configured to be different from each other such that flow rates of the cooling medium supplied to the respective battery modules through the connection holes are equalized.

2. The battery pack according to claim 1,
wherein the cooling pipe assembly comprises:
a plurality of cooling pipes configured such that the cooling medium flows therethrough; and
a plurality of connectors to which adjacent cooling pipes among the plurality of cooling pipes and the insertion port are coupled, and
wherein the connection holes are configured to communicate with the respective connectors.

3. The battery pack according to claim 2,
further comprising a pack case configured to accommodate the plurality of battery modules and the cooling pipe assembly,
wherein the plurality of connectors and the plurality of insertion ports are arranged in one direction of the pack case, and
wherein the cross-sectional area of the connection hole increases in one direction of the pack case.

4. The battery pack according to claim 3,
wherein the cooling pipe assembly
is provided in pairs to face each other, based on the plurality of battery modules, and
further comprises an inlet port provided on one side of the pack case such that the cooling medium flows therethrough and an outlet port provided to face the inlet port on one side of the pack case and configured to discharge the cooling medium, and
wherein the cross-sectional area of the connection hole increases as it is farther from the inlet port or the outlet port.

5. The battery pack according to claim 2,
wherein each of the plurality of battery modules
further comprises a heat sink configured to cool the plurality of battery cells, and
wherein the insertion port is configured to connect the heat sink and the plurality of connectors, respectively.

6. The battery pack according to claim 3,
wherein each of the plurality of connectors comprises
a port insertion portion having the insertion port inserted thereinto and having the connection hole, and a pipe insertion portion configured to communicate with the port insertion portion and having at least one of the plurality of cooling pipes coupled thereto.

7. The battery pack according to claim 6,
wherein the insertion port comprises
a hooking portion having at least a portion that protrudes outward and is hooked on the end of the port insertion portion.

8. The battery pack according to claim 7,
wherein the insertion port is coupled upward to the port insertion portion from below so that the end of the port insertion portion is supported on the hooking portion.

9. The battery pack according to claim 3,
further comprising an insertion pipe inserted into the insertion port to vary the cross-sectional area of the connection hole between the respective insertion ports.

10. The battery pack according to claim 9,
wherein the inner diameter of the insertion pipe becomes larger in one direction of the pack case.

11. The battery pack according to claim 9,
wherein the insertion pipe comprises
a body portion inserted into the insertion port, and
a seating portion extending from the body portion so as to be seated on the end of the insertion port.

12. The battery pack according to claim 9,
wherein the insertion pipe comprises a guide protrusion in which at least a portion there protrudes outward, and
wherein the insertion port comprises a guide groove that is configured such that at least a portion thereof is recessed to correspond to the guide protrusion and such that the guide protrusion is slidably coupled thereto.

13. The battery pack according to claim 6,
wherein the port insertion portion comprises
a first connector hole into which the insertion port is inserted such that the end of the insertion port is located therein, and
a second connector hole defined as the remaining portion, excluding the first connector hole, extending from the first connector hole in the insertion direction of the insertion port, and configured to vary the cross-sectional area of the connection hole between the respective insertion ports.

14. The battery pack according to claim 13,
wherein the cross-sectional area of the second connector hole becomes larger in one direction of the pack case.

15. The battery pack according to claim 13,
wherein the port insertion portion
further comprise a protrusion protruding inward from at least a portion of the second connector hole.

16. The battery pack according to claim 15,
wherein the length of the protrusion becomes smaller in one direction of the pack case.

17. The battery pack according to claim 15,
wherein one or more protrusions are provided, and
wherein the number of protrusions is reduced in one direction of the pack case.

18. The battery pack according to claim 15,
wherein the protrusion is configured to be supported by the end of the insertion port.

19. A vehicle comprising the battery pack of any one of claims 1 to 18.
